# FASCICULE DE BREVET EUROPEEN

(11) **EP 0 506 513 B1**
(45) Date de publication et mention de la délivrance du brevet: **01.02.1995**
(21) Numéro de dépôt: 92400700.8
(22) Date de dépôt: 17.03.1992
(51) Int. Cl.: F16K 47/08

(54) **Limiteur de débit**
Durchflussregler
Flow control valve

(30) Priorité: 29.03.1991 FR 9103856
(43) Date de publication de la demande: 30.09.1992
(73) Titulaire: ALLIEDSIGNAL EUROPE SERVICES TECHNIQUES, 93700 Drancy (FR)
(72) Inventeur: Bourlon, Philippe, BENDIX EUROPE, F-93700 Drancy (FR)
(74) Mandataire: Bentz, Jean-Paul

(56) Documents cités:
- DE-C- 653 469
- GB-A- 979 459
- US-A- 1 964 300
- US-A- 2 236 084
- US-A- 2 236 084
- PATENT ABSTRACTS OF JAPAN vol. 12, no. 91 (M-679)(2938) 24 Mars 1988

## Description

La présente invention concerne les limiteurs de débit, en particulier pour fluides hydrauliques.

Il est courant, par exemple lors de la conception d'une machine-outil, de prévoir, par mesure d'économie, une installation susceptible de fonctionner à des rythmes consécutifs aux divers types d'usinage à réaliser. On utilise alors des limiteurs ou régulateurs de débit qui permettent d'adapter les vitesses de travail aux besoins de la production. Ces limiteurs de débit sont alors de façon connue mis en circuit ou hors circuit par des distributeurs ou des électrovannes convenablement pilotés. Des limiteurs de débit sont également utilisés lorsqu'on désire ralentir le fonctionnement d'un récepteur de pression, tel qu'un vérin ou un moteur hydrauliques.

Il est également connu que, pour réduire le débit d'un fluide, il faut soit restreindre la section du passage emprunté par le fluide, soit allonger la longueur du passage pour augmenter la perte de charge. Ainsi, pour chaque application, on sait déterminer un limiteur de débit comportant par exemple un passage dont la section et la longueur sont telles que pour une pression du fluide donnée en amont du limiteur, la pression du fluide en aval aura une valeur prédéterminée, et donc que le débit de fluide à travers le limiteur aura une valeur prédéterminée. Toutefois, un limiteur de débit ainsi réalisé sera totalement inutilisable dans une autre application, et la conception d'un autre limiteur sera alors nécessaire.

On connaît, par exemple, du document GB-A-979 459 qui correspond au préambule de la revendication principale, un régulateur de débit permettant de faire varier de façon continue la quantité du fluide qui le traverse pour une pression en amont constante, mais il est de construction compliquée, d'un prix de revient élevé et d'un maniement délicat.
La présente invention a donc pour objet de réaliser un limiteur de débit, permettant de délivrer un débit de fluide ajustable à une valeur prédéterminée, par des moyens simples, peu coûteux et faciles à mettre en oeuvre.

Dans ce but, la présente invention propose un limiteur de débit pour fluide hydraulique, comportant au moins un passage de section réduite pour le fluide hydraulique, le passage étant réalisé entre deux pièces contigües possédant chacune au moins une face plane, au moins l'une des deux pièces comportant une empreinte en creux sur ladite face plane, le passage de section réduite étant défini dans le volume situé entre l'empreinte en creux réalisée sur une face plane de l'une des pièces et la face plane de l'autre pièce, la longueur du passage de section réduite étant réglable par variation de la position relative des deux pièces.

Selon l'invention, un perçage est pratiqué dans une pièce à une extrémité du passage de section réduite et un perçage est pratiqué dans l'autre pièce à l'autre extrémité du passage de section réduite.

D'autres buts, caractéristiques et avantages de la présente invention ressortiront de la description qui suit de modes de réalisation d'un limiteur de débit donnés à titre d'exemple non limitatif, en référence aux dessins annexés dans lesquels :
- La Figure 1 est une vue en bout d'une pièce constituant un limiteur de débit conforme à la présente invention,
- La Figure 2 est une vue en bout d'une autre pièce d'un limiteur de débit conforme à la présente invention,
- La Figure 3 est une vue en coupe développée selon la ligne A-A de la Figure 1,
- La Figure 4 est une vue en coupe d'un limiteur de débit réalisé conformément à la présente invention, et
- La Figure 5 est une vue en coupe d'une variante de limiteur de débit réalisé conformément à la présente invention.

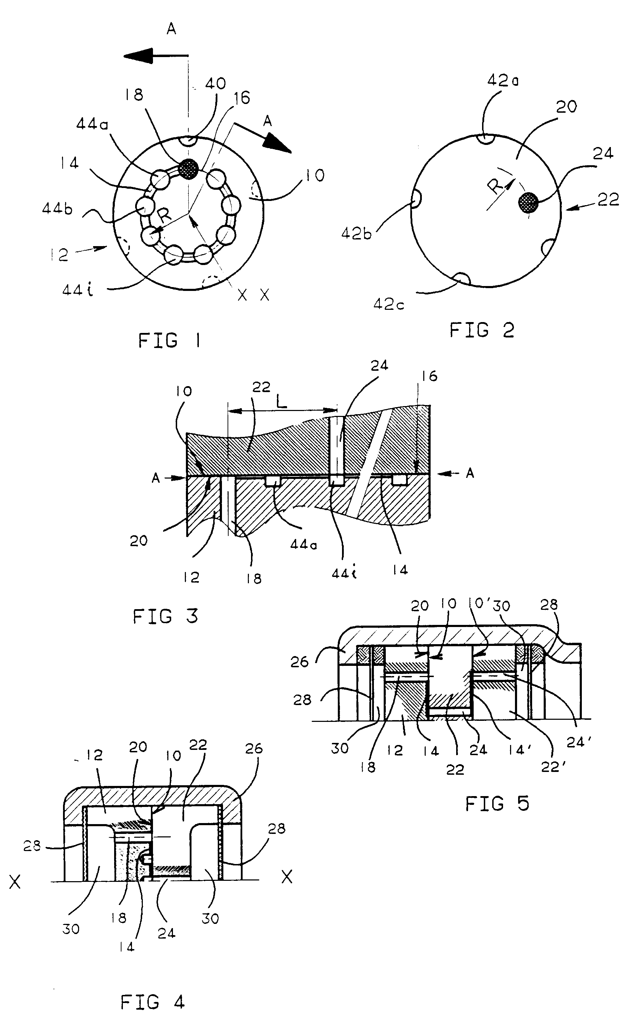

On voit sur la Figure 1 une face plane 10 d'une pièce cylindrique 12 sur laquelle une empreinte en creux a été réalisée. Dans l'exemple représenté, cette empreinte forme un sillon circulaire 14, dont le centre est sur l'axe X-X de la pièce cylindrique 10. De façon plus précise, le sillon 14 est formé sur une portion de cercle de rayon R de façon à ménager une zone plane 16 en continuité avec le reste de la face 10. A l'une des extrémités du sillon 14, un perçage 18 est pratiqué dans la pièce 12 parallèlement à l'axe X-X, et traversant la pièce 12.

On voit sur la Figure 2 une face plane 20 d'une autre pièce cylindrique 22 de même diamètre que celui de la pièce cylindrique 12. Un perçage 24 est pratiqué dans la pièce 22, parallèlement à son axe, à une distance R de celui-ci, et traversant la pièce 22.

Le limiteur de débit ou restricteur est réalisé conformément à l'invention en appliquant l'une contre l'autre les faces 10 et 20 des pièces 12 et 22 respectivement. Si les perçages 18 et 24 se trouvent l'un en face de l'autre, le fluide hydraulique arrivant par exemple par le perçage 18 ne rencontrera aucun obstacle pour passer dans le perçage 24. Par contre, si le perçage 24 n'est pas aligné avec le perçage 18 et n'est pas en face de la zone 16, alors le fluide hydraulique arrivant par le perçage 18 devra suivre le sillon 14 formant un passage de section réduite sur une certaine longueur L pour arriver au perçage 24 et ainsi sortir du limiteur de débit, comme on l'a illustré sur la Figure 3.

On comprend donc que, en faisant tourner les pièces 12 et 22 l'une par rapport à l'autre, on fait varier la longueur L que doit parcourir le fluide hydraulique. On fait donc varier ainsi la perte de charge subie par le fluide sous pression.

Une fois la valeur désirée atteinte, les pièces 12 et 22 peuvent être immobilisées l'une par rapport à l'autre, par exemple par soudure aux ultrasons. On peut également, de façon alternative ou additionnelle, encapsuler les pièces 12 et 22, une fois leur position relative déterminée, dans un manchon cylindrique 26 dont les bords sont rabattus par exemple par sertissage pour maintenir les pièces 12 et 22 en contact et dans leur position relative. On pourra alors avantageusement disposer, sur les faces des pièces 12 et 22 qui ne sont pas en contact et qui forment les extrémités du limiteur, des filtres 28 pour éviter toute intrusion d'impuretés dans le dispositif. Les faces des pièces 12 et 22 qui ne sont pas en contact ne sont pas nécessairement planes et peuvent, comme on l'a représenté sur la Figure 4, comporter une dépression formant avec les filtres 28 des chambres 30 d'entrée et de sortie du fluide.

Selon la variante de réalisation illustrée sur la Figure 5, on a réalisé sur la face 10' de la pièce 22 qui n'est pas en contact avec la face 10 de la pièce 12 une empreinte en creux ou sillon 14' semblable au sillon 14, débutant à l'endroit où le perçage 24 débouche sur la face 10'.

Ce sillon 14' apporte une nouvelle restriction elle aussi réglable au passage du fluide entre le perçage 24 et un perçage 24' d'une pièce 22' identique à la pièce 22 décrite précédemment. On voit donc que, de façon avantageuse grâce à l'invention, il est possible de réaliser un limiteur de débit apportant une restriction importante au passage d'un fluide, équivalente à celle de plusieurs limiteurs de débit en série. Dans ce mode de réalisation, il est bien évident que les sillons 14 et 14' peuvent être réalisés chacun sur une des faces 20, 10' de la pièce centrale, les pièces d'extrémité étant alors identiques.

Il peut également arriver que, dans certaines installations ou pour certaines applications, les restrictions à apporter à un débit de fluide soient connues d'avance et présentent un certain nombre de valeurs discrètes. Il est alors désirable de prévoir des pièces 12 et 22 qui puissent être assemblées de la façon décrite précédemment pour présenter directement la limitation du débit souhaitée, c'est-à-dire la longueur de passage de section réduite dans le sillon 14.

Ce but est également atteint de façon simple grâce à la présente invention. En effet, on peut dans ce but prévoir une indexation des pièces 12 et 22 l'une par rapport à l'autre. De façon plus précise, et comme on l'a représenté sur les Figures 1 et 2, on peut prévoir sur la pièce 12 par exemple un repère 40, et sur l'autre pièce 22 plusieurs repères 42a, 42b, 42c, ... De la sorte, lorsque l'on applique l'une contre l'autre les faces 10 et 20 des pièces 12 et 22, il suffit de faire coïncider le repère 40 avec l'un des repères 42i pour avoir immédiatement la valeur de la restriction requise.

Les repères d'indexation 40 et 42i peuvent revêtir de nombreuses formes. Ils peuvent par exemple consister en un marquage sur la partie extérieure cylindrique des pièces 12 et 22. Ils peuvent aussi être réalisés par un bossage 40 dépassant le plan de la face 10 de la pièce 12, et coopérant avec un des repères 42i réalisés alors sous forme de parties en creux et de forme complémentaire à celle du bossage 40. On peut encore réaliser le repère 40 sous forme d'une gorge pratiquée sur la surface cylindrique de la pièce 12 et parallèlement à l'axe X-X, les repères 42i étant eux aussi réalisés sous forme de gorges pratiquées sur la surface cylindrique de la pièce 22 et parallèlement à son axe de révolution. De la sorte, il suffit d'aligner la gorge 40 et une des gorges 42i. L'avantage de cette dernière variante est que la gorge unique formée de la réunion de la gorge 40 avec une des gorges 42i peut coopérer avec une nervure formée à l'intérieur du manchon 26 parallèlement à l'axe X-X.

Dans le cas où des valeurs discrètes de restriction de débit sont requises, on peut également avantageusement prévoir de réaliser, le long du sillon 14, et aux différentes positions angulaires prévues pour être en face du perçage 24 lors de l'assemblage du limiteur, des creux 44a, 44b, ..., 44i, obtenus par exemple par fraisage, tels qu'ils présentent sur la face 10 un diamètre égal à celui du perçage 24, ainsi qu'on l'a représenté sur les Figures 1 et 3. L'avantage de réaliser ces creux 44i réside dans le fait que la portion de sillon 14 entre deux creux peut alors avoir une longueur parfaitement déterminée, et qu'un léger décalage angulaire entre les pièces 12 et 22 en dehors de la position désirée sera sans influence sur la longueur effective de sillon 14 parcourue par le fluide.

On a donc bien réalisé conformément à l'invention un limiteur de débit particulièrement simple. Ce limiteur est obtenu par l'assemblage de deux pièces selon une configuration déterminée par la valeur de la limitation à obtenir. Ces deux pièces sont identiques et pour réaliser des limiteurs de débit de caractéristiques très différentes, elles sont simplement assemblées dans des positions relatives différentes. Elles peuvent donc être produites en grande série, donc avec des coûts de fabrication très bas.

Bien que seuls certains modes de réalisation ont été décrits, l'invention est susceptible de recevoir de nombreuses modifications qui apparaîtront utiles à l'homme de l'art et qui rentrent dans le cadre des revendications. C'est ainsi que les pièces 12 et 22 peuvent avoir une symétrie autre que cylindrique comme on l'a représenté. Elles peuvent par exemple être des parallélépipèdes à 3, 4 ou un nombre quelconque de côtés. De même, on peut réaliser un limiteur de débit où la variation de la longueur du passage de section réduite le long du sillon 14 est obtenue non plus par une rotation relative des pièces 12 et 22, mais par une translation relative de ces pièces, à la manière d'un distributeur à tiroir.

## Revendications

1. Limiteur de débit pour fluide hydraulique comportant au moins un passage (14) de section réduite pour le fluide hydraulique, le passage (14) étant réalisé entre deux pièces (12,22) contigües possédant chacune au moins une face plane (10,20), au moins l'une des deux pièces (12,22) comportant une empreinte (14) en creux sur ladite face plane (10,20), le passage (14) de section réduite étant défini dans le volume situé entre l'empreinte en creux (14) réalisée sur ladite face plane (10) de l'une des pièces et la face plane (20) de l'autre pièce, la longueur du passage (14) de section réduite étant réglable par variation de la position relative des deux pièces (12,22), caractérisé en ce qu'un perçage (18) est pratiqué dans une pièce (12) à une extrémité du passage de section réduite (14) et en ce qu'un perçage (24) est pratiqué dans l'autre pièce (22) à l'autre extrémité du passage de section réduite (14).

2. Limiteur de débit selon la revendication 1, caractérisé en ce que des empreintes en creux (44i) sont pratiquées le long du passage (14) de section réduite sur la face (10) de l'une des pièces (12) en face du perçage (24) pratiqué dans l'autre pièce (22).

3. Limiteur de débit selon la revendication 2, caractérisé en ce que les empreintes en creux (44i) présentent sur la face (10) de la pièce (12) où elles sont pratiquées un diamètre égal à celui du perçage (24) pratiqué dans l'autre pièce.

4. Limiteur de débit selon la revendication 3, caractérisé en ce que les deux pièces (12, 22) sont indexées (40,42i) l'une par rapport à l'autre.

5. Limiteur de débit selon la revendication 4, caractérisé en ce que le réglage de la longueur du passage (14) de section réduite est obtenu par une rotation relative des deux pièces (12,22).

6. Limiteur de debit selon la revendication 4, caractérisé en ce que le réglage de la longueur du passage (14) de section réduite est obtenu par une translation relative des deux pièces (12,22).

## Claims

1. Flow limiter for hydraulic fluid, comprising at least one passage (14) of reduced cross-section for the hydraulic fluid, the passage (14) being formed between two contiguous pieces (12,22) each having at least one plane face (10,20), at least one of the two pieces (12,22) comprising a recessed impression (14) on said plane face (10,20), the passage (14) of reduced cross section being defined within the space situated between the recessed impression (14) formed on a plane face (10) on one of the pieces and the plane face (20) of the other piece (22), the length of the passage (14) of reduced cross section being adjustable by varying the relative position of the two pieces (12,22), characterized in that a pierced hole (18) is made in one piece (12) at one end of the passage (14) of reduced cross section and in that a pierced hole (24) is made in the other piece (22) at the other end of the passage (14) of reduced cross section.

2. Flow limiter according to Claim 1, characterized in that recesses (44i) are made along the passage (14) of reduced cross section on the face (10) of one of the pieces (12) opposite the pierced hole (24) made in the other piece (22).

3. Flow limiter according to Claim 2, characterized in that the recesses (44i) have on the face (10) of the piece (12) where they are made a diameter equal to that of the pierced hole (24) of the other piece.

4. Flow limiter according to Claim 3, characterized in that the two pieces (12,22) are indexed (40,42i) relative to each other.

5. Flow limiter according to Claim 4, characterized in that the adjustment of the length of the passage (14) of reduced cross section is obtained by a relative rotation of the two pieces (12,22).

6. Flow limiter according to Claim 4, characterized in that the adjustment of the length of the passage (14) of reduced cross section is obtained by a relative translation of the two pieces (12,22).

## Patentansprüche

1. Durchflußbegrenzer für Hydraulikfluid, mit wenigstens einem Durchgang (14) mit vermindertem Querschnitt für das Hydraulikfluid, wobei der Durchgang (14) zwischen zwei aneinanderliegenden Teilen (12, 22) gebildet ist, die jeweils wenigstens eine ebene Seite (10, 20) aufweisen, wobei wenigstens eines der Teile (12, 22) eine Vertiefung (14) auf der wenigstens einmal vorhandenen ebenen Seite (10, 20) aufweist, wobei der Durchgang (14) mit vermindertem Querschnitt in dem Volumen gebildet ist, das zwischen der auf der ebenen Seite (10) des einen Teils gebildeten Vertiefung (14) und der ebenen Seite (20) des anderen Teils gelegen ist, wobei die Länge des Durchgangs (14) mit vermindertem Querschnitt durch Verändern der Stellung der beiden Teile (12, 22) relativ zueinander einstellbar ist, dadurch gekennzeichnet, daß in einem Teil (12) an einem Ende des Durchgangs (14) mit vermindertem Querschnitt eine Bohrung (18) ausgebildet ist und daß in dem anderen Teil (22) an dem anderen Ende des Durchgangs (14) mit vermindertem Querschnitt eine Bohrung (24) ausgebildet ist.

2. Durchflußbegrenzer nach Anspruch 1, dadurch gekennzeichnet, daß entlang dem Durchgang (14) mit vermindertem Querschnitt auf der Seite (10) des einen Teils (12) gegenüber der in dem anderen Teil (22) ausgebildeten Bohrung (24) Vertiefungen (44i) ausgebildet sind.

3. Durchflußbegrenzer nach Anspruch 2, dadurch gekennzeichnet, daß die Vertiefungen (44i) auf der Seite (10) des Teils (12), in der sie ausgebildet sind, einen Durchmesser aufweisen, der gleich dem der in dem anderen Teil ausgebildeten Bohrung (24) ist.

4. Durchflußbegrenzer nach Anspruch 3, dadurch gekennzeichnet, daß die beiden Teile (12, 22) rastend (40, 42i) gegeneinander weiterverstellbar sind.

5. Durchflußbegrenzer nach Anspruch 4, dadurch gekennzeichnet, daß die Einstellung der Länge des Durchgangs (14) mit vermindertem Querschnitt durch eine Drehung der beiden Teile (12, 22) relativ zueinander erhalten wird.

6. Durchflußbegrenzer nach Anspruch 4, dadurch gekennzeichnet, daß die Einstellung der Länge des Durchgangs (14) mit vermindertem Querschnitt durch eine Verschiebung der beiden Teile (12, 22) relativ zueinander erhalten wird.
